# EUROPEAN PATENT SPECIFICATION

(11) **EP 0 610 645 B1**
(45) Date of publication and mention of the grant of the patent: **21.04.1999**
(21) Application number: 93850030.3
(22) Date of filing: 12.02.1993
(51) Int. Cl.: H04Q 7/34, H04B 7/26

(54) **Method of distributing channel capacity in a cellular system**
Verfahren zur Verteilung von Kanalkapazität in einem Zellularsystem
Méthode de distribution de la capacité en canaux dans un système cellulaire

(43) Date of publication of application: 17.08.1994
(73) Proprietor: TELIA AB, 123 86 Farsta (SE)
(72) Inventor: Gunmar, Krister, S-136 80 Haninge (SE); Tegth, Ulf, S-136 80 Haninge (SE)
(74) Representative: Akerman, Marten Lennart

(56) References cited:
- WO-A-90/10341
- ALTA FREQUENZA vol. 57, no. 2, 1988, ITALY pages 89 - 96 GAMST 'A Resource Allocation Technique for FDMA Systems'
- TELETRAFFIC ISSUES vol. 2, September 1985, KYOTO JAPAN pages 228 - 234 AKIYAMA 'Adaptive Channel Assignments in a Small Cell Mobile Radio Communication System'

## Description

### FIELD OF THE INVENTION

The present invention relates to a method in a mobile radio system using a technical means, preferably a computer, for determining, for a given channel plan, the distribution of marginal traffic capacity of given base stations corresponding to cells, within the coverage area of which a number of mobile radio stations exist, said radio stations being movable from the coverage area of cell to the coverage area of another cell, the mobile radio system being provided with a number of channels.

The term cell refers to the solid angle irradiated by a specific antenna system and providing coverage according to given coverage limit values. Thus, a base station can sustain a plurality of cells having various antenna diagrams, bearings and effective transmitted power. The invention is used in radio cell systems in which a control unit for channel allocation is provided in each cell. According to the invention a method of indicating, in dependence of the traffic need and a primary given channel plan, at which cells in an existing mobile radio system it is possible to change the capacity by adding more channels per cell at the same time as the number of channels per cell is reduced in other cells.

### STATE OF THE ART

The mobile radio systems in various countries are growing rapidly, especially in large urban areas, and new methods are developed to achieve traffic handling with an efficient utilization of radio frequency aspects. In many places of the world computer programs are beginning to be used to perform channel allocation. These programs utilize information about which cells that can not share a channel with, or have a neighbouring channel with, any other cell, said information being described by a so-called exclusion matrix. The solutions obtained so far represent stationary solutions in which the channels once and for all are fixed for fixed base stations or cells. However, there is a need to redistribute the channels for different cells in dependence of the traffic need in the course of the day. The method proposed by the invention is useful if an exlusion matrix for every cell in the radio system is available and a channel plan of the cells in the system. The channel plan satisfies a stationary partial need of capacity in the system. The method results in the possibility of redistributing the capacity in the various cells of the mobile radio system.

The following documents deal with similar methods.

The document WO90/10341 relates to a method for resource allocation in a radio system comprising base stations with respective coverage areas and mobile units. The interaction between the stations in the system is defined with the aid of measured and/or calculated field strengts from all base stations on relevant traffic routes in the geographic area of the radio system, preferably in the form of an exclusion matrix. An allocating matrix is formed by compressing the exclusion matrix by means of an allocating algorithm. The algorithm utilizes figures of merit which are on the one hand calculated by mathematical/logical means to form possible combinations of stations and utilizes on the other hand a random technique for selecting one of these combinations. The algorithm is iterated a number of times and different allocations are obtained thanks to the random technique. The best one of the allocations from any point of view is selected.

The article "A Resource Allocation Technique for FDMA Systems" in ALTA FREQUENZA describes a resource allocation problem which can be viewed as a model for the problem of finding a compatible frequency plan for the required voice channels in FDMA mobile radio telephone systems. A general and efficient algorithm solving the problem approximately is described in detail. It relies on the determination of a priori bounds on the frequency demand combined with an iterative nondeterministic assignment strategy. The possibility of extending these ideas to TDMA systems is discussed briefly.

### SUMMARY OF THE INVENTION

Thus, the present invention provides a method of determining the distribution of marginal traffic capacity for given cells in a radio cell system comprising a number of base stations with cells and associated coverage areas, and radio stations within the coverage areas of the cells. The characterizing feature of the invention is that compatibilty calculations are performed by means of a technical means for each element or a selective selection of elements of an exclusion matrix with respect to all or a selective selection of channels in a given channel allocation in such a manner that a list can be generated by means of said technical means for alternative channels for each cell within the base stations. Thereafter, a distribution of maximal traffic capacity for the cell in terms of the number of realizable channels per cell is calculated by means of said technical means by selecting cells with alternative, not mutually excluding possible channels in accordance with a given order of priority, by examining alternative possible channels according to the list in a further order of priority, and by adding one of the possible channels to the cell, resulting in a new channel plan and exclusion matrix, which creates the basis of a new list. This procedure is iterated until no alternative channel for the cell can be found in the list and hence no further channel for the cell can be added, or the remaining cells are uninteresting in view of their low priority according to a given order of priority. Similarly, channels may be subtracted in low priority cells and thus, their capacity is decreased. The orders of priority are naturally dependent of the current traffic situation in the system. In means provided centrally, for instance a computer, the allocation of the required number of channels per cell can be made dependent of the traffic need in every moment, which is assumed to be known and recorded and continuously updated in a memory unit provided centrally, and the above control unit in each cell in question obtains information continuously about the momentary valid channel plan in order to enable connection of the for the moment best, in view of the traffic demand, possible channels.

### BRIEF DESCRIPTION OF THE DRAWINGS

Table 1 shows an example of a channel allocation.

Table 2 shows an exclusion matrix having as many elements as the number of cells.

Table 3 shows marginal capacity with respect to the channel plan of table 1 and the exclusion matrix of table 2.

Table 4 shows marginal capacity in a channel plan developed with new channels per cell according to table 1, see also table 5, and an exclusion matrix according to table 2 with additional inserted elements representing further channels for existing cells Am,m=1,2......etc.

Table 5 shows the channel plan developed with new channels according to table 1.

Table 6 shows the maximal capacity of the radio system in form of number of channels per cell in given orders of priority for cells and channels.

### DETAILED DESCRIPTION OF PREFERRED EMBODIMENTS

The following description is based on a realization with a specific example having a degree of complexity comparable with that of NMT 900 in the Stockholm area. In table 1 is shown a channel allocation in the form of a list having lines of element numbers and, at the left, associated channels having the designations 1, 21, 2, 22, etc. The reason for the designations 1, 21, 2, 22, etc. is that the channel allocation relates to a mobile radio system having so-called inter-leaved channels. Obviously succeeding channels are neighbouring channels, for instance 21 and 2. For each channel it is possible to read out what elements are to be assigned to this channel, for instance the elements 27, 53, 55, etc. are to be assigned to channel 1. What cells these element numbers relate to can be read from the exclusion matrix, see table 2. The number of elements in the cell equals the number of channels allocated to the cell and thus, is an expression of the capacity that may be handled by the cell. In the exclusion matrix of table 2, however, it happens to be only one channel per cell. A prerequisite of enabling allocation of allocating the same channel to different elements is that the exclusion matrix does not contain cochannel exclusions between these elements. Cochannels exclusion and neighbouring channel exclusion are represented by two element number series included in each element. These two number series indicate the elements that are excluded to have a channel being cochannel and neighbouring channel or cochannel, respectively, to the element under study. Thus, if we consider the elements to which channel 21 is allocated and the corresponding elements of the exclusion matrix it may be seen that these elements do not have any mutual cochannel exclusions or neighbouring channel exclusions, and neither any neighbouring channel exclusions with respect to the elements allocated the channels 1, 2. The invention is exemplified by the following procedure, which is carried out by means of a computer :
1. Select element number 1 of the exclusion matrix. Can channel number 1 be allocated to this element? The question is answered by calculating from the exclusion matrix all cochannel exclusions and neighbouring channel exclusions generated by elements having the numbers 27, 53, 55, etc., and all neighbouring channel exclusions generated by the elements having the numbers 3, 9, 20, etc. If among these exclusions number 1 is not found as cochannel exclusion or as neighbouring channel exclusion, and if the elements 27, 53, etc. are not found as cochannel or neighbouring channel exclusions among the exclusions of element 1 of the exclusion matrix, and if the elements 3, 9, etc. are not found as neighbouring channels of an exclusion of the element 1 of the exclusion matrix, channel 1 can be allocated to element 1. The fact that element 1 can be on channel 1 is entered in a list comprising element numbers, cell numbers and possible channel candidates compatible with the channel. We call this list marginal list, see table 3.
2. Select again element number 1 of the exclusion matrix. Can channel 21 be allocated to this element? To obtain an answer to this question the above procedure is repeated. The calculations will be more comprehensive this time, since channel 21 as opposed to channel 1 has two neighbouring channels, and channel exclusions for every element thereof must be retrieved from the exclusion matrix. Furthermore, the neighbouring channel exclusions of element number 1 have to be checked against the elements of the channels 1, 21 and 2. In case channel 21 can be allocated to element 21 (see table 1) this is entered in the channel list.
3. The above procedure is repeated until it has been verified if channels 21, 2, 22, 3, etc., through the last channel 29 can be allocated to element 1 and if it is possible to allocate the respective channel an entry is made in the marginal list.
4. The above procedure with the steps 1-3 is repeated until every element of the matrix has been examined and thereby also every cell.

The current marginal list generated by the channel allocation of table 1 and exclusion matrix of table 2 is shown in table 3. It will happen that channel alternatives of a given element is presented being mutually exclusive, see e,g. possible channels for cell A 13, where channel 9 excludes both channel 28 and channel 29.

Therefore, if cell A 13 has channel 9 it can not be enlarged with further channels. If instead channel 28 is allocated to the cell also channel 29 can be added. For this reason the number of alternatives is not a direct expression of the geographical distribution of overall free capacity of the channel allocation. However, the list expresses the degree of free marginal capacity, i.e. the capacity of absorbing at least one further channel in an arbitrary cell. Through the following procedure it is possible to derive a distribution of the cells having the largest possible traffic handled by the system:
1. Begin with element 1 of the marginal list of table 3, if the corresponding cell has the highest priority with respect to capacity need, and note that one further channel can be accommodated in cell 1, meaning that the cell can have both channels 22 and 8. Thus, add an additional element to the exclusion matrix having the exclusions corresponding to cell A 1. The new elements of the exclusion matrix should be provided with cochannel exclusions with respect to the old element and, if necessary, which we assume here, neighbouring channel exclusions. If the new element relating to cell A 1 gets the serial number 2 it will be necessary to renumber all succeeding elements of the exclusion matrix and new versions of the lists in tables 1 to 3 have to be generated. In case no channel alternative exists of a selected cell the next cell in the order of priority is selected.
2. A new marginal list analogous with the list of table 3 is generated for the new channel plan and the new exclusion matrix. The procedure of generating the marginal list is described above.
3. The procedure according to 1 and 2 is repeated, now with a new cell from the new marginal list, said cell being selected with a high priority from a traffic point of view, which allows extension with one further channel.
4. The procedure 1 to 3 is repeated until there are no additional channels left at one's disposal or until there are only such cells left that do not require an extension of the capacity.
5. When the above procedure is finished the result is a marginal list reflecting the maximal capacity of the cell system for the special order of priority of cells and channels selected when extending the capacity of the cells in the series of marginal lists. Obviously, it is only desired to extend the capacity of the cells that have the heaviest load from a traffic point of view. Table 4 shows an example of a marginal list being result of the above procedure when it is completed until no further capacity remains. As may be seen, the alternatives represented are all mutually exclusive and cannot increase the capacity of the cell further. The resulting channel plan is shown in table 5 and the maximal capacity per cell is shown in table 6.

In an already established mobile radio system the above method is used to redistribute the channels of the system. This is done by transferring information about the traffic need of the various parts of the radio system from the various radio stations to centrally provided means, e.g. a computer calculating a new order of priority with respect to the present traffic need. Idle channels, if any, thereafter are added in accordance with the above description to the cells requiring further capacity. If it is not possible to add a cell quite simply a redistribution between the cells can be achieved by taking a channel from a cell and transferring it to another cell. This means that the radio system continuously is optimized in response to the traffic need.

The present invention has a plurality of advantages as is appreciated by a skilled person. The invention is only limited by the claims below.

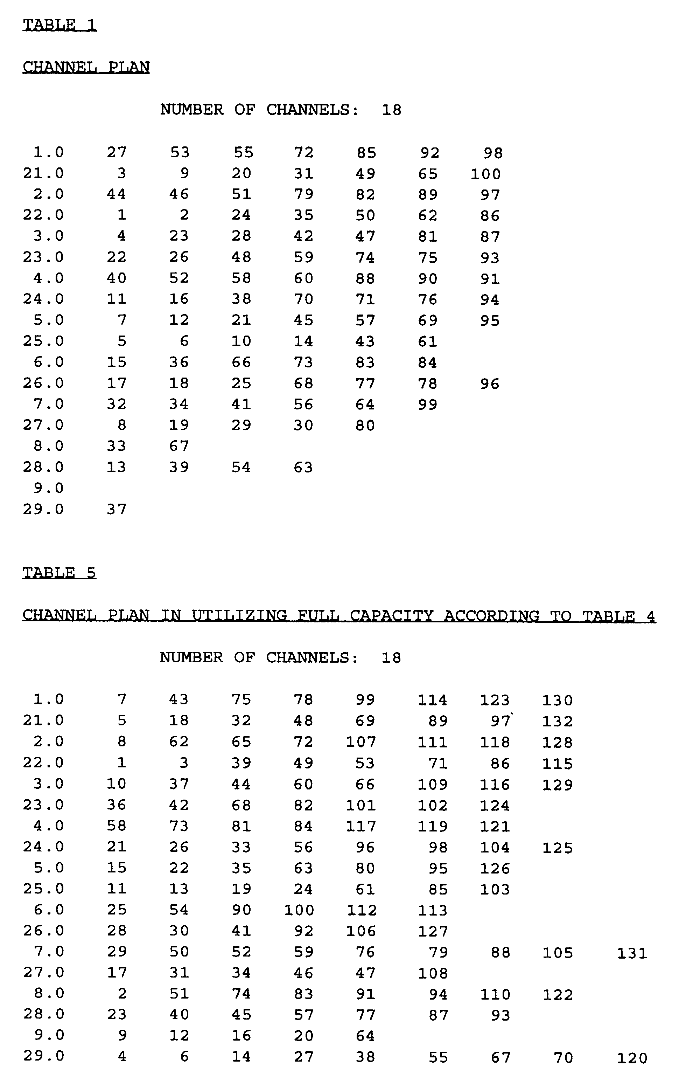

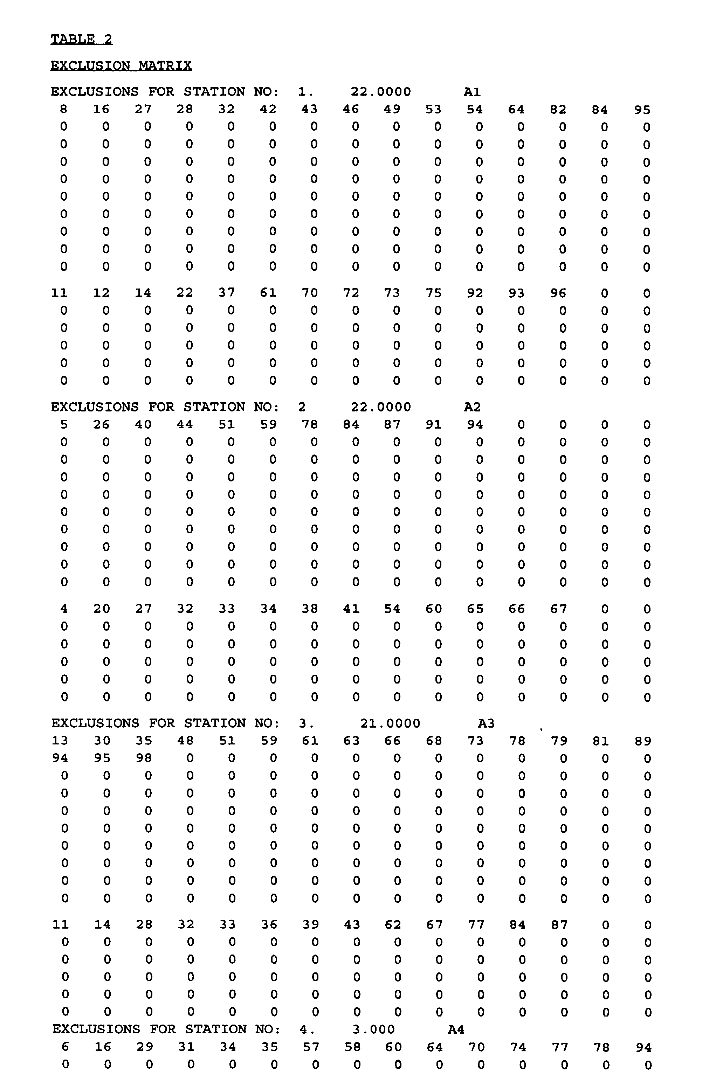

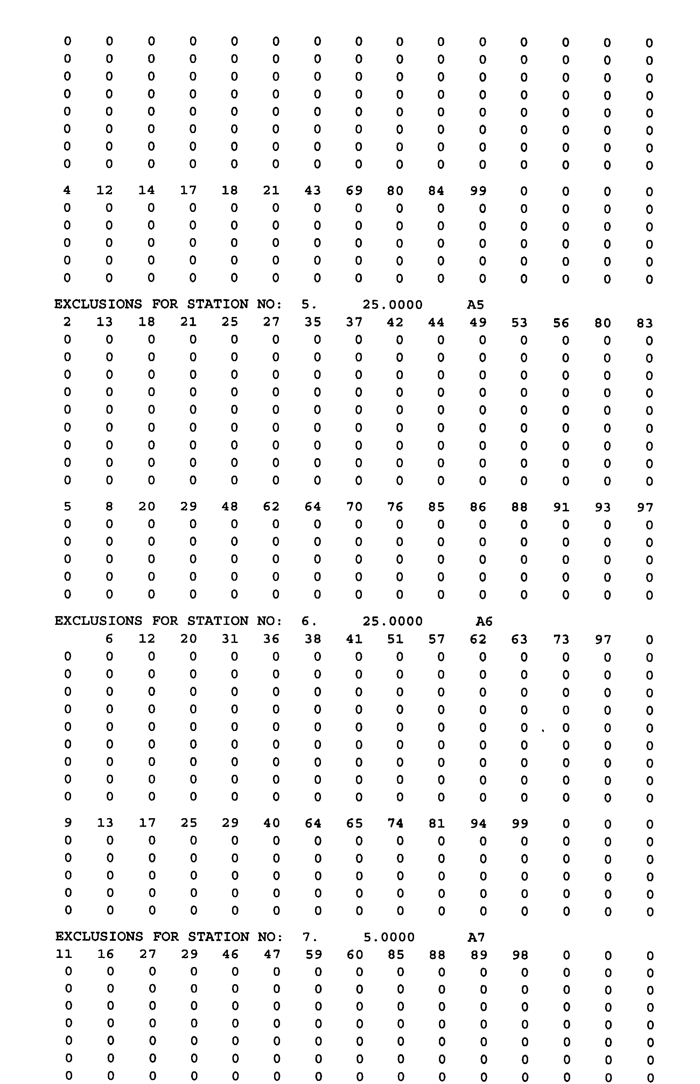

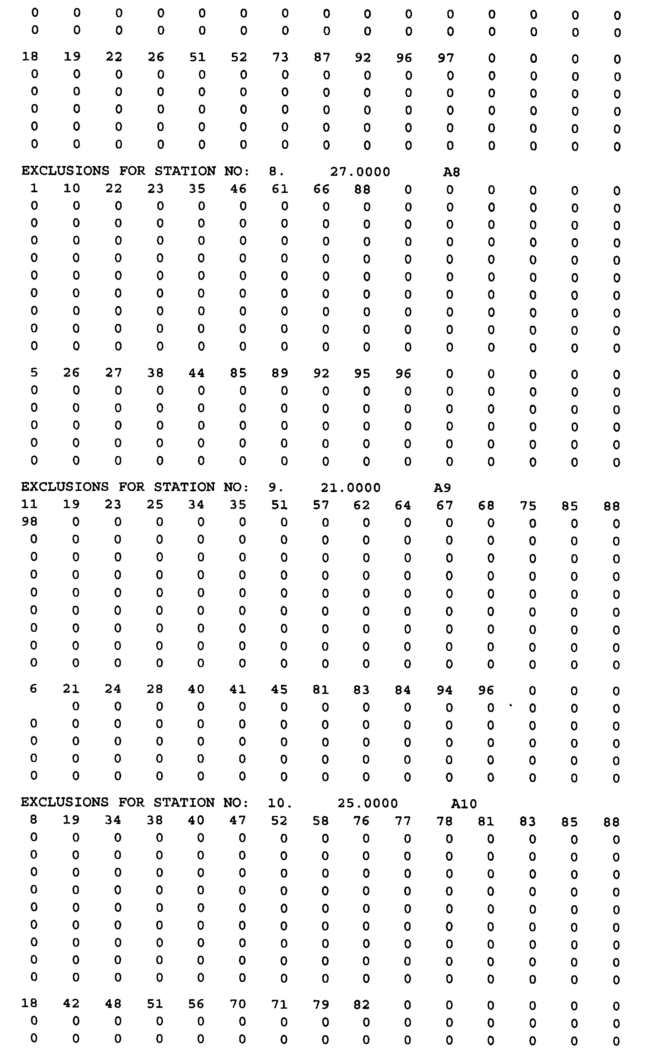

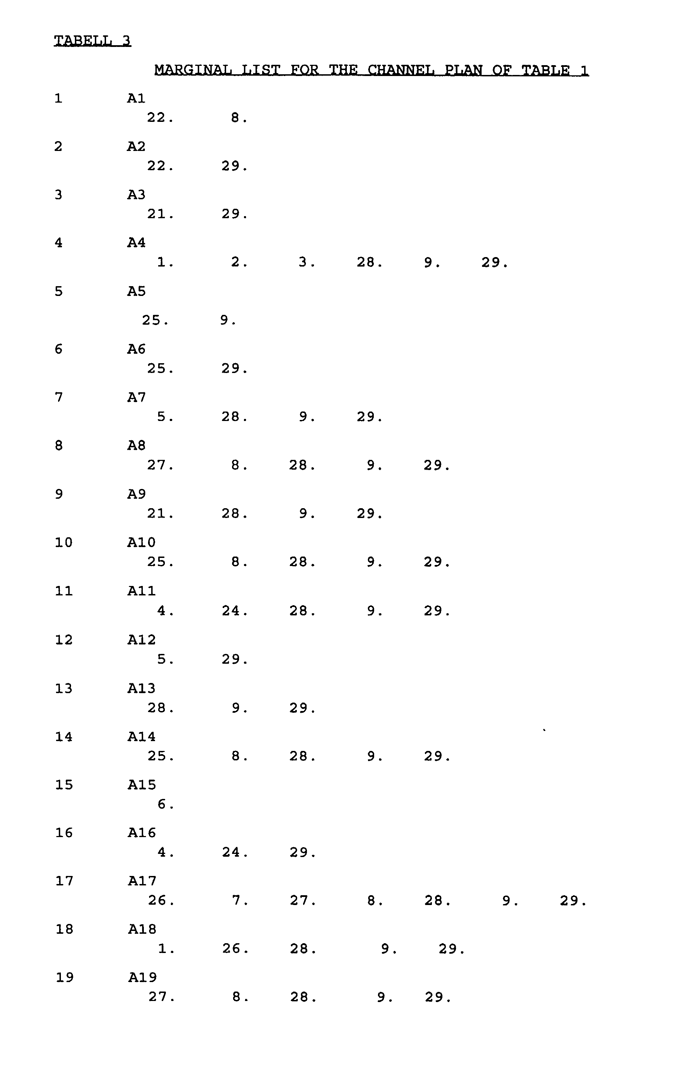

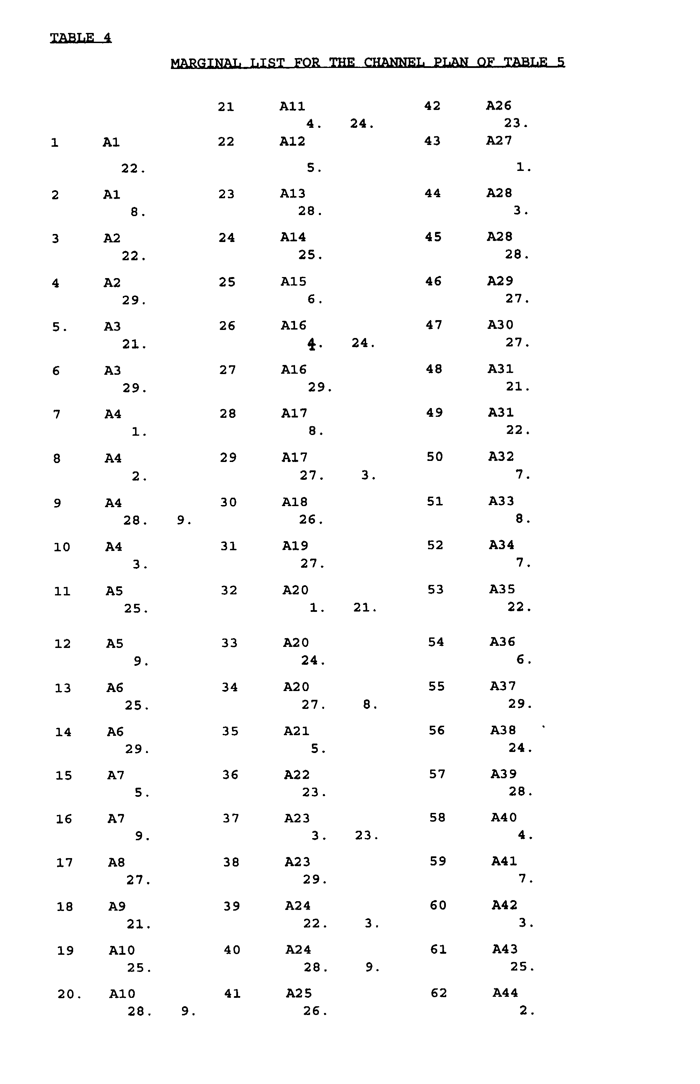

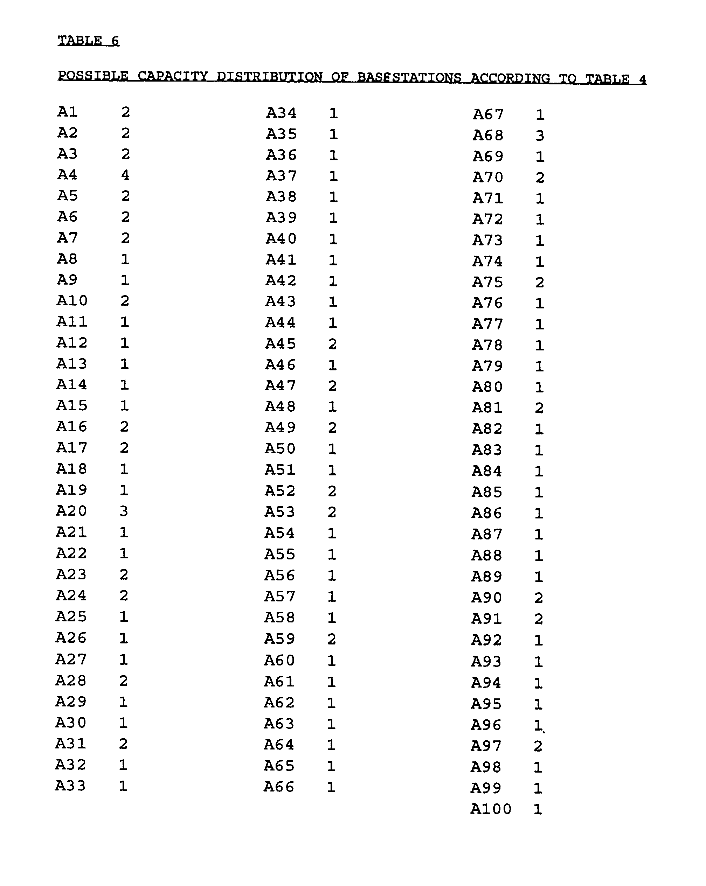

## Claims

1. Method in a mobile radio system using a technical means, preferably a computer, for determining, for a given channel plan, the distribution of marginal traffic capacity of given base stations corresponding to cells, within the coverage area of which a number of mobile radio stations exist, said radio stations being movable from the coverage area of cell to the coverage area of another cell, the mobile radio system being provided with a number of channels, **characterized** in that compatibility calculations are performed by said technical means for each element or for a selection of elements of an exclusion matrix with respect to all or a selection of the channels in a given channel allocation in such a manner that a marginal list is generated by said technical means for alternative channels for each cell within the base stations, whereby a distribution of maximal traffic capacity for the cell in terms of the number of realizable channels per cell is calculated by means of said technical means by selecting cells with alternative, not mutually excluding possible channels in accordance with a given order of priority, by examining alternative possible channels according to said marginal list in a further order of priority, and by adding one of possible channels to the cell, resulting in a new channel plan and exclusion matrix, which creates the basis of a new marginal list, which marginal list is used for distribution of traffic capacity with respect to the traffic need varying in time in each cell.

2. Method according to claim 1, **characterized** in that the cells are prioritized in dependence of the prevailing traffic need in time periods having variable duration.

3. Method according to any one of the preceding claims, **characterized** in that the traffic capacity of the mobile radio system is optimized by examining alternative possible channels according to the marginal lists for a given initial channel allocation, or alternatively the prevailing channel allocation, and selecting a cell having alternative non-excluding channels according to an order of priority, adding a channel to the cell, as well as subtracting the corresponding channel, if necessary, from another cell where it is not needed at the moment, generating a new channel plan and exclusion matrix, which create the basis of a new marginal list, iterating this procedure until no alternative channel can be found in the marginal list and hence no further channel can be added or redistributed in the system, or the remaining cells are uninteresting with respect to their low priority according to the order of priority.

4. Method according to any one of the preceding claims, **characterized** in that a control of the mobile radio system is achieved by means of centrally provided technical means, e.g. a computer.

5. Method according to any one of the preceding claims, **characterized** in that centrally provided technical means continously receive information about the traffic need from the base stations from which new orders of priority are calculated.

## Patentansprüche

1. Verfahren in einem Mobilfunksystem, das technische Mittel, vorzugsweise einen Computer zum Bestimmen der Verteilung von Grenzverkehrskapazität von gegebenen Basisstationen für einen vorgegebenen Kanalplan verwendet, die Zellen entsprechen, innerhalb deren Abdeckungsbereich eine Anzahl beweglicher Funkstationen existiert, die vom Abdeckungsbereich einer Zelle zum Abdeckungsbereich einer anderen Zelle bewegbar sind, wobei das Mobilfunksystem mit einer Anzahl von Kanälen versehen ist, dadurch gekennzeichnet, daß Kompatibilitätsberechnungen durch die technischen Mittel für jedes Element oder für eine Auswahl von Elementen einer Ausschließungsmatrix in bezug auf alle oder eine Auswahl der Kanäle bei einer gegebenen Kanalzuordnung in solcher Weise durchgeführt werden, daß eine Grenzwertliste durch die technischen Mittel für alternative Kanäle für jede Zelle innerhalb der Basisstationen erzeugt wird, wodurch eine Verteilung maximaler Verkehrskapazität für die Zelle, was die Anzahl von realisierbaren Kanälen pro Zelle betrifft, durch die technischen Mittel berechnet wird, indem Zellen mit alternativen, sich nicht gegenseitig ausschließenden möglichen Kanälen in Übereinstimmung mit einer vorgegebenen Prioritätsreihenfolge berechnet wird, indem alternative mögliche Kanäle entsprechend der Grenzwertliste in einer weiteren Prioritätsreihenfolge untersucht werden und indem einer der möglichen Kanäle der Zelle hinzugefügt wird, was zu einem neuen Kanalplan und einer neuen Ausschließungsmatrix führt, die die Basis einer neuen Grenzwertliste bildet, welche Grenzwertliste für die Verteilung von Verkehrskapazität in bezug auf das Verkehrserfordernis verwendet wird, das sich mit der Zeit in jeder Zelle ändert.

2. Verfahren nach Anspruch 1, dadurch gekennzeichnet, daß die Zellen in Abhängigkeit von dem vorherrschenden Verkehrserfordernis in Zeitperioden, die veränderliche Dauer haben, mit Priorität versehen werden.

3. Verfahren nach einem der vorangehenden Ansprüche, dadurch gekennzeichnet, daß die Verkehrskapazität des Mobilfunksystems dadurch optimalisiert wird, daß alternative mögliche Kanäle entsprechend den Grenzwertlisten für eine vorgegebene ursprüngliche Kanalzuordnung oder alternativ die überwiegende Kanalzuordnung untersucht wird und daß eine Zelle ausgewählt wird, die alternative, sich nicht ausschließenden Kanäle gemäß einer Prioritätsreihenfolge hat, daß ein Kanal der Zelle hinzugefügt wird und auch, falls notwendig, der entsprechende Kanal von einer anderen Zelle weggenommen wird, wo er im Moment nicht benötigt wird, daß ein neuer Kanalplan und eine neue Ausschließungsmatrix erzeugr wird, die die Grundlage einer neuen Grenzwertliste bilden, daß dieses Verfahren iteriert wird, bis in der Grenzwertliste kein alternativer Kanal gefunden werden kann und daher kein weiterer Kanal im System hinzugefügt oder anders eingeteilt werden kann, oder bis die verbleibenden Zellen im Hinblick auf ihre niedrige Priorität entsprechend der Prioritätsreihenfolge uninteressant sind.

4. Verfahren nach einem der vorangehenden Ansprüche, dadurch gekennzeichnet, daß die Steuerung des Mobilfunksystems mit Hilfe von zentral vorgesehenen technischen Mitteln, z. B. einem Computer, bewirkt wird.

5. Verfahren nach einem der vorangehenden Ansprüche, dadurch gekennzeichnet, daß zentral vorgesehene technische Mittel dauernd Informationen über das Verkehrserfordernis von den Basisstationen erhält, von denen neue Prioritätsreihenfolgen berechnet werden.

## Revendications

1. Procédé, dans un système radio mobile utilisant des moyens techniques, de préférence un ordinateur, pour déterminer, pour un plan de canaux donné, la répartition de la capacité de trafic marginal de stations de base données correspondant à des cellules situées à l'intérieur de la zone de couverture où existe un certain nombre de stations radio mobiles, lesdites stations radio étant mobiles de la zone de couverture d'une cellule à la zone de couverture d'une autre cellule, le système radio mobile étant pourvu d'un certain nombre de canaux, caractérisé en ce que des calculs de compatibilité sont effectués par lesdits moyens techniques pour chaque élément pour un choix d'éléments d'une matrice d'exclusion par rapport à l'ensemble ou à une sélection des canaux dans une allocation de canaux donnée, d'une manière telle qu'une liste marginale soit générée par lesdits moyens techniques pour d'autres canaux pour chaque cellule à l'intérieur des stations de base, de façon qu'une répartition de capacité de trafic maximum pour les cellules en termes du nombre de canaux réalisables par cellule soit calculée au moyen desdits moyens techniques en sélectionnant des cellules avec d'autres canaux possibles ne s'excluant pas mutuellement, conformément à un ordre de priorité donné, en examinant d'autres canaux possibles en fonction de ladite liste marginale dans un autre ordre de priorité et en ajoutant l'un des canaux possibles à la cellule, fournissant un nouveau plan de canaux et une nouvelle matrice d'exclusion, créant les bases d'une nouvelle liste marginale, laquelle liste marginale étant utilisée pour la répartition de capacité de trafic par rapport aux besoins de trafic variant dans le temps dans chaque cellule.

2. Procédé selon la revendication 1, caractérisé en ce que les cellules reçoivent une priorité dépendant des besoins en trafic prédominant pendant des périodes de temps ayant une durée variable.

3. Procédé selon l'une quelconque des revendications précédentes, caractérisé en ce que la capacité de trafic du système radio mobile est optimisée en examinant d'autres canaux possibles en fonction des listes marginales pour une allocation de canaux initiale donnée ou comme alternative, l'allocation de canaux prédominants et en sélectionnant une cellule comportant d'autres canaux non-exclusifs en fonction d'un ordre de priorité, en ajoutant un canal à la cellule ainsi qu'en soustrayant le canal correspondant, si nécessaire, d'une autre cellule où il n'est pas nécessaire à ce moment, en générant un nouveau plan de canaux et une nouvelle matrice d'exclusion, ce qui crée les bases d'une nouvelle liste marginale, en itérant cette procédure jusqu'à ce qu'il ne soit trouvé aucun autre canal dans la liste marginale et ainsi aucun autre canal ne puisse être ajouté ou de nouveau réparti dans le système ou bien les cellules restantes sont inintéressantes en ce qui concerne leur priorité faible en fonction de l'ordre de priorité.

4. Procédé selon l'une quelconque des revendications précédentes, caractérisé en ce qu'un contrôle du système radio mobile est réalisé au moyen de moyens techniques disposés d'une manière centrale, par exemple un ordinateur.

5. Procédé selon l'une quelconque des revendications précédentes, caractérisé en ce que les moyens techniques disposés de manière centrale reçoivent en continu des informations concernant le trafic nécessaire depuis les stations de base à partir desquelles de nouveaux ordres de priorité sont calculés.
